# EUROPÄISCHE PATENTSCHRIFT

(11) **EP 0 619 331 B1**
(45) Veröffentlichungstag und Bekanntmachung des Hinweises auf die Patenterteilung: **28.01.1998**
(21) Anmeldenummer: 94104492.7
(22) Anmeldetag: 22.03.1994
(51) Int. Cl.: C08G 16/00, C08G 8/28, C09D 11/10

(54) **Phenolharz-modifizierte Cyclopentadienharze, Verfahren zu ihrer Herstellung und ihre Verwendung**
Cyclopentadiene resins modified with phenolic resins, process for their preparation and use
Résines de cyclopentadiène modifiées avec des résines phénoliques, procédé pour les préparer et leur utilisation

(30) Priorität: 05.04.1993 DE 4311127
(43) Veröffentlichungstag der Anmeldung: 12.10.1994
(73) Patentinhaber: HOECHST AKTIENGESELLSCHAFT, 65926 Frankfurt am Main (DE)
(72) Erfinder: Bender, Albert, Dr., D-55130 Mainz (DE)

(56) Entgegenhaltungen:
- EP-A- 0 214 526
- DE-A- 2 150 216
- FR-A- 2 488 613
- US-A- 4 574 057

## Beschreibung

Die Erfindung betrifft Phenolharz-modifizierte Cyclopentadienharze, ein verbessertes Verfahren zu ihrer Herstellung aus Naturharzsäuren, Cyclopentadienverbindungen, Phenolen und Aldehyden in Gegenwart von Katalysatoren sowie ihre Verwendung.

Aus der DE-C 24 06 555 sind öllösliche Harze, die vorteilhaft als Bindemittelharze in Farben für den Offsetdruck zum Einsatz kommen und die eine gute Verträglichkeit mit Mineralöl aufweisen, bekannt. Sie werden durch Modifizierung von Naturharzsäuren mit Kohlenwasserstoffharzen und Phenolharzen erhalten.

Beim Modifizierungsschritt mit Phenolharz sind zwei Vorgehensweisen möglich. Zum einen kann das Phenolharz in Form eines Resols, das dann in einer separaten Stufe hergestellt wird, die der eigentlichen Umsetzung vorgeschaltet ist, zum Kohlenwasserstoffharz zugegeben werden. Es ist aber auch möglich, das Resol während der Reaktion in der Kohlenwasserstoffharzschmelze aus den Einzelkomponenten, nämlich dem entsprechenden Phenol und dem Aldehyd, zumeist Formaldehyd, unter Einwirkung eines Katalysators herzustellen.

Als Katalysatoren für die Reaktion von Phenol mit Aldehyd in der Kohlenwasserstoffharzschmelze werden basische Verbindungen von Magnesium, Calcium, oder Zink eingesetzt. Diese Katalysatoren haben jedoch den schwerwiegenden Nachteil, daß sie die Umsetzung von Formaldehyd mit Phenolen in der Schmelze des Umsetzungsprodukts von Naturharzsäuren mit den Cyclopentadienharzen nur unvollständig zu katalysieren in der Lage sind. Demzufolge können dann bei der eigentlichen Polykondensation zwischen der Naturharzsäure-modifizierten Kohlenwasserstoffharz-Vorstufe und dem in dessen Schmelze gebildeten Phenol-Aldehyd-Kondensationsprodukt, die bei erhöhter Temperatur durchgeführt wird, bis zu 30 Gew.-% des eingesetzten aber nicht reagierten Aldehyds zusammen mit anderen flüchtigen Substanzen aus der Reaktionsmischung abdestillieren. Dieser Aldehyd muß dann entweder durch fraktionierte Destillation zurückgewonnen oder als Destillat durch Verbrennen entsorgt werden. Diese Vorgehensweise ist in jedem Fall unwirtschaftlich. Die Umsetzung verläuft auch bei erhöhtem Druck, beispielsweise im Bereich 3 bis 5 bar, nicht vollständig. Darüber hinaus entstehen unlösliche Anteile, die die Harzeigenschaften negativ beeinflussen.

Durch die Phenolharz-Modifizierung wird üblicherweise ein Molekulargewichtsaufbau angestrebt, der hohe Lösungsviskositäten hervorruft, die für ein gutes drucktechnisches Ergebnis vorteilhaft sind. Wird zuviel Aldehyd verloren, zeigen die Produkte dann jedoch einen ungenügenden Molekulargewichtsaufbau, der sich in nachteiligen niedrigen Lösungsviskositäten und einer eingeschränkten drucktechnischen Leistung, beispielsweise in einem schlechten Wegschlagverhalten und einer mangelhaften Trocknung bemerkbar macht.

Für die technische Realisierung ist es zudem vorteilhaft, anstelle der polymeren Kohlenwasserstoffharze direkt niedermolekulare Cyclopentadienverbindungen einzusetzen. Es wurde daher auch bereits vorgeschlagen, Harze aus Umsetzungsprodukten von Naturharzsäuren mit Cyclopentadienverbindungen und Modifizierung mit vorkondensierten Phenolharzen herzustellen (Deutsche Patentanmeldung P 42 11 721). Ein Nachteil dieses Verfahrens ist jedoch, daß die Phenolharze bei dieser Variante in einem separaten Verfahrensschritt hergestellt werden müssen.

Die Aufgabe bestand daher darin, Phenolharz-modifizierte Cyclopentadienharze auf direktem Weg bereitzustellen durch Reaktion von Naturharzsäuren mit Cyclopentadienverbindungen und weitere Umsetzung mit Aldehyden und Phenolen, die dabei quantitativ abreagieren.

Diese Aufgabe konnte erfindungsgemäß dadurch gelöst werden, daß man als Katalysatoren der Resolbildung basisch wirkende Verbindungen is von Lithium, Natrium oder Kalium, insbesondere aber von Lithium, verwendet.

Gegenstand der Erfindung sind daher Phenolharz-modifizierte Cyclopentadienharze, herstellbar aus
a) 20 bis 80 Gew.-% Cyclopentadienverbindungen,
b) 1 bis 40 Gew.-% Naturharzsäuren,
c) 1 bis 60 Gew.-% Phenolen,
d) 1 bis 20 Gew.-% Aldehyden
   in Gegenwart von
e) 0,01 bis 1 Gew.-% basisch wirkenden Verbindungen von Lithium, Natrium oder Kalium.

Die erfindungsgemäßen Phenolharz-modifizierten Cyclopentadienharze sind vorzugsweise durch Umsetzung von 25 bis 60, insbesondere 30 bis 50 Gew.-% Cyclopentadienverbindungen, 5 bis 30, insbesondere 10 bis 25 Gew.-% Naturharzsäuren, 20 bis 50, insbesondere 25 bis 35 Gew.-% Phenole, 3 bis 15, insbesondere 5 bis 10 Gew.-% Aldehyde in Gegenwart von 0,05 bis 0,8, insbesondere 0,1 bis 0,2 Gew.-% basisch wirkenden Verbindungen von Lithium, Natrium oder Kalium herstellbar.

Ein Gegenstand der Erfindung ist auch ein Verfahren zur Herstellung der Phenolharz-modifizierten Cyclopentadienharze. Dies kann in einer Eintopfreaktion erfolgen, indem die Komponenten a), b), c), d) und e) gleichzeitig miteinander umgesetzt werden. Bevorzugt setzt man jedoch die Komponenten a) und b) zuerst miteinander um und läßt dieses Reaktionsprodukt dann mit den Komponenten c), d) und e) reagieren.

Geeignete Cyclopentadienverbindungen a) sind solche aus einem überwiegenden Anteil von Cyclopentadieneinheiten, wie Cyclopentadien, Methylcyclopentadien, Dicyclopentadien sowie polymere Cyclopentadienharze. Die Harze sind in der Regel aus Kohlenwasserstoff-Fraktionen mit einem Siedebereich von 20 bis 180 °C, vorzugweise 30 bis 165 °C aufgebaut. Unter a) sind vorzugsweise flüssige Cyclopentadienverbindungen wie Oligomere des Cyclopentadiens, beispielsweise durch Diels-Alder-Addition erhältliche Di-, Tri- und Tetramere sowie die Alkylderivate oder Cooligomere dieser Verbindungen mit beispielsweise Methylcyclopentadien, Isopren, Piperylen zu verstehen. Die betreffenden Ausgangssubstanzen brauchen keinen hohen Reinheitsgrad aufzuweisen. Es können beispielsweise Fraktionen, insbesondere konzentrierte Fraktionen, verwendet werden, die beim thermischen Dimerisieren einer C5-Fraktion entstehen, wobei diese C5-Fraktion als Nebenprodukt bei der thermischen Zersetzung von Naphtha und entsprechenden Erdölfraktionen anfällt. Bei einer solchen Dimerisierung wird das in einer solchen Fraktion enthaltene Cyclopentadien bzw. Methylcyclopentadien in Dicyclopentadien, Dimethyldicyclopentadien, ein Dimeres aus Cyclopentadien und Methylcyclopentadien, ein Dimeres aus Cyclopentadien und Isopren, ein Dimeres aus Cyclopentadien-Piperylen und andere entsprechende dimere Substanzen umgewandelt. In diesen Fraktionen können noch weitere ungesättigte Monomere, wie beispielsweise Propylen, Buten, Butadien, Penten, Cyclopenten oder Cyclohexen enthalten sein. Auch können sogenannte C9-Fraktionen, die als Nebenprodukt bei der Crackung von Naphtha entstehen, enthalten sein. Diese bestehen dann beispielsweise aus Styrol, alpha-Methylstyrol, Vinyltoluol, Inden, Methylinden oder Mischungen davon.

Geeignete Naturharzsäuren b) sind beispielsweise Kolophonium, Tallharzsäure, Wurzelharz, dimerisiertes, hydriertes oder polymerisiertes Kolophonium beliebiger Provenienz.

Die Reaktion von a) mit b), die vorzugsweise thermisch durchgeführt wird, kann in Substanz, aber auch in Gegenwart von inerten Lösungsmitteln erfolgen. Es eignen sich hierzu beispielsweise aromatische Kohlenwasserstoffe, wie Benzol, Toluol, Xylole und Tetrahydronaphthalin, aliphatische Kohlenwasserstoffe, wie Isooctan, Testbenzin sowie Gemische aus alkylierten Benzolen mit einem Siedebereich von 100 bis 200 °C. Werden flüchtige Cyclopentadienverbindungen eingesetzt, so wird wegen der hohen Reaktionstemperatur das Verfahren vorzugsweise unter erhöhtem Druck durchgeführt. Dieser beträgt vorzugsweise bis zu 10 bar. Wegen der Oxidationsempfindlichkeit der Reaktionsprodukte ist es außerdem von Vorteil, in der Atmosphäre eines unter den Reaktionsbedingungen inerten Gases, wie Stickstoff oder Kohlendioxyd zu arbeiten. Die Reaktionstemperatur für die Reaktion der Komponenten a) und b) beträgt 50 bis 300, vorzugsweise 100 bis 280 °C. Nach Reaktionsende können die erhaltenen Umsetzungsprodukte durch gegebenenfalls Abdestillieren von Lösungsmittel und nicht umgesetzten Monomeren als Feststoffe isoliert werden. Ihr Erweichungspunkt liegt im allgemeinen zwischen 40 und 200 °C, vorzugsweise zwischen 120 und 170 °C. Einfacher ist es jedoch, die durch Umsetzung von a) mit b) erhaltenen Produkte ohne vorherige Isolierung mit den Verbindungen c), d) und e) umzusetzen. Diese Ausführungsform ist deshalb bevorzugt.

Geeignete Phenole c) sind Phenol, substituierte Phenole, wie Alkylphenole, vorzugsweise solche mit 1 bis 12 Kohlenstoffatomen im Alkylrest, Aryl- oder Aralkylphenole, beispielsweise Kresole wie m-Kresol, 1,3,5-Xylenole, Isopropyl-, p-tert.-Butyl-, Amyl-, Octyl- oder Nonylphenol, Phenylphenol, Cumylphenol, ferner Diphenylolpropan. Geeignete Aryl- oder Aralkylphenole oder durch andere carbocyclische Gruppen substituierte Phenole sind solche, wie sie durch Anlagerung von ungesättigten Monomeren, wie Styrol, α-Methylstyrol, α-Chlorstyrol, Vinyltoluol, Cyclopentadien an Phenole in bekannter Weise unter Verwendung saurer Katalysatoren erhalten werden. Durch den überwiegenden Anteil an Alkyl-oder Aralkylphenolen lassen sich gewünschte Verträglichkeiten der Reaktionsgemische mit aliphatischen Kohlenwasserstoffen erzielen. Bevorzugt sind bifunktionelle Phenole, das sind solche Phenole, in denen zwei o- und/oder p-Stellungen zu wenigstens einer phenolischen Hydroxylgruppe frei und reaktiv sind. Trifunktionelle und höher funktionelle Phenole werden im allgemeinen nur zusammen mit bifunktionellen phenolischen Bestandteilen, beispielsweise den genannten Alkylphenolen und/oder Anlagerungsprodukten der Phenole mit ungesättigten Monomeren eingesetzt. Hierbei können die mindestens trifunktionellen Phenole, beispielsweise Phenol oder Diphenylolpropan, in einem Anteil von vorzugsweise bis zu 10, insbesondere bis zu 5 Gew.-%, bezogen auf die Gesamtmenge an Phenolen, mitverwendet werden. Durch die Dosierung der trifunktionellen Phenole läßt sich die Löslichkeit der Endprodukte, insbesondere in aliphatischen Kohlenwasserstoffen, steuern. Andererseits kann durch höheren Gehalt an trifunktionellen Phenolen die Löslichkeit der Produkte in aromatischen Kohlenwasserstoffen erhöht werden.

Als Aldehyd-Komponenten d) seien beispielsweise Aldehyde mit 1 bis 7 Kohlenstoffatomen, insbesondere Formaldehyd in monomerer Form oder verschiedenen polymeren Formen wie Trioxan und Paraformaldehyd, aber auch andere Aldehyde, wie Acetaldehyd, Butyraldehyd, Isobutyraldehyd, Benzaldehyd oder Furfurol genannt. Das Molverhältnis Phenol zu Aldehyd kann in weiten Grenzen schwanken und beträgt beispielsweise mindestens 1:0,9 und höchstens 1:4, vorzugsweise 1:1 bis 1:3, insbesondere bis 1:2,5. Durch die Natur und Menge der Phenol-Aldehyd-Komponenten im Ausgangsgemisch läßt sich die Viskosität der Endprodukte auf bequeme Weise steuern. Es können auch verschiedene Phenole in Form einer Mischung eingesetzt werden. Andererseits können sie gegebenenfalls auch in Form von Addukten umgesetzt werden, die durch Addition von ungesättigten Monomeren, beispielsweise den obengenannten, an die Phenole erhalten werden.

Die Umsetzung von c) mit d) wird erfindungsgemäß so durchgeführt, daß diese Verbindungen in einem Temperaturbereich von vorzugsweise 50 bis 160 °C, besonders bevorzugt 70-160°C, insbesondere 100 bis 140 °C in Gegenwart eines Katalysators e) in der Schmelze des Reaktionsproduktes aus a) und b) oder auch dessen Lösung zur Reaktion gebracht werden. Dabei wird zweckmäßigerweise unter Druck, der vorzugsweise zwischen 1 und 10 bar, vorzugsweise 1 und 5 bar, insbesondere 1,5 und 4 bar liegt, gearbeitet.

Hierbei ist es unbedingt erforderlich, einen Katalysator e) zu verwenden. Als Katalysator e) werden vorzugsweise basisch wirkende Verbindungen von Lithium, Natrium und Kalium, wie beispielsweise die Hydroxide, Oxide, Carbonate, Hydrogencarbonate, Formiate, Acetate und Oxalate eingesetzt.

Natrium- und Kaliumverbindungen setzen c) mit d) vollständig um, jedoch können hier unlösliche Anteile entstehen, die die Harzeigenschaften negativ beinflussen können. Bei Verwendung von Lithiumverbindungen als Katalysatoren gelingt die vollständige Umsetzung von c) mit d), ohne daß unlösliche Anteile im Harz auftreten. Die Verwendung von basischen Lithiumverbindungen, insbesondere Lithiumhydroxid, ist deshalb besonders bevorzugt.

Nach erfolgter Resolbildung wird zweckmäßigerweise drucklos weitergearbeitet. Um die Umsetzung des gebildeten Resols mit dem Kohlenwasserstoffharz herbeizuführen, wird nun auf hohe Temperaturen erhitzt, so daß das Reaktionswasser abdestilliert. Die Reaktionstemperatur beträgt hier im allgemeinen 200 bis 300 °C, vorzugsweise 240 bis 270 °C.

Der Fortgang der Reaktion zu den erfindungsgemäßen modifizierten Cyclopentadienharzen wird durch Bestimmung charakteristischer Kennzahlen, wie Säurezahl oder Viskosität, in einem geeigneten Lösungsmittel überprüft. Sobald die gewünschten Werte erreicht sind, wird die Reaktion durch Abkühlen auf Raumtemperatur abgebrochen. Befinden sich Lösungsmittel im Reaktionsgemisch, so werden diese zweckmäßigerweise vorher durch Verflüchtigen, beispielsweise durch Destillation, entfernt. In manchen Fällen kann es jedoch erwünscht sein, die Lösungsmittel, insbesondere aliphatenreiche Mineralöle vorzugsweise mit einem Siedebereich von 240 bis 320 °C, zumindest teilweise in den Produkten zu belassen, um je nach Wunsch Schmelzpunkt und Viskosität des Harzes zu variieren. Hierbei sind alle Möglichkeiten vom festen über einen flüssigen Harz-Mineralöl-Firnis bis zur Lösung gegeben.

Das erfindungsgemäße Verfahren ermöglicht die vorteilhafte Herstellung von klar löslichen Phenolharz-modifizierten Cyclopentadienharzen durch Umsetzung von Naturharzsäuren mit niedermolekularen Cyclopentadienverbindungen, Phenolen und Aldehyden.

Die erfindungsgemäß hergestellten Produkte sind hochschmelzende Harze. Solche Produkten haben einen Schmelzbereich von 120 bis 225 °C, vorzugsweise 135 bis 200 °C. Sie sind mit Mineralöl des Siedebereichs 240 bis 270 °C und des Anilinpunkts 72 °C, vorzugsweise im Gewichtsverhältnis Harz zu Öl von mindestens 1:3 bis 1:10 verträglich. Es besteht daher die Möglichkeit, erfindungsgemäß erhaltene, besonders hochschmelzende Produkte der Erfindung nach der Reaktion beispielsweise mit aliphatenreichen Mineralölen zu verdünnen und dadurch eine Schmelzpunkts- und Viskositätserniedrigung zu erhalten.

Ein weiterer Gegenstand der Erfindung ist die Verwendung der erfindungsgemäßen Phenolharz-modifizierten Cyclopentadienharze als Bindemittel.

Lösungen der Produkte in aliphatischen Mineralölen lassen sich als Firnisse für Überzüge, insbesondere Anstrichmittel und Druckfarben, verwenden. Für diesen Zweck lassen sie sich gut mit Alkydharzen, Sikkativen, wie Naphthenaten oder Octoaten von Kobalt, Zink, Mangan, Blei oder dergleichen und Pigmenten, ferner mit im allgemeinen bis zu 1 Gew.-% chelatbildenden Metallverbindungen, wie Titanaten oder Aluminiumalkoholaten, zu Druckfarbenbindemitteln für den Bogen- und Rollenoffsetdruck verarbeiten. Die Chelatbildner können eine gewisse Gelbildung in erwünschtem Ausmaß erleichtern und damit auch zu einer rascheren Trocknung und einem besseren Stand auf dem Papier beitragen.

Die nachstehenden Beispiele dienen zur Erläuterung der Erfindung, ohne diese einzuschränken.

### Vergleichsbeispiel 1

### Herstellung eines Harzes nach der Herstellvorschrift gemäß der Patentanmeldung P 42 11 721 (Beispiel 2) in Gegenwart von Magnesiumoxid.

In einer 3 l-Druckapparatur werden 300 g Kolophonium auf 260 °C erhitzt. Dazu werden innerhalb 2 h 700 g Dicyclopentadien mit einem Gehalt von 75 % Cyclopentadien-Einheiten zudosiert und weitere 5 h unter Rühren bei dieser Temperatur gehalten; dabei bildet sich der zunächst auf 9 bar gestiegene Druck auf 5 bar zurück. Dann läßt man die Schmelze auf 110 °C abkühlen. In diese abgekühlte Schmelze werden 627 g Nonylphenol, 172 g Paraformaldehyd und 2 g Magnesiumoxid gegeben. Dann wird die Apparatur druckdicht verschlossen und 4 Stunden auf 150 °C erhitzt, wobei sich ein Druck von bis zu 4 bar einstellt. Dann wird der Überdruck abgelassen, der Gasraum mit Stickstoff gespült und das Gemisch bei Normaldruck auf 260 °C erwärmt. Nach 25 Stunden bei 260 °C wird die Reaktion abgebrochen. Es werden 1422 g eines spröden Festharzes (79 % der Theorie) mit einem Schmelzpunkt ab 155 °C erhalten. Eine 40 Gew.-%ige Lösung in einem aromatenarmen Mineralöl des Siedebereichs 240 bis 270 °C und dem Anilinpunkt 72 °C weist eine Viskosität von 5 dPa·s auf. Die Lösung ist trüb, enthält also ungelöste Anteile.

### Beispiel 1

### Herstellung eines Harzes analog Vergleichsbeispiel 1 in Gegenwart der äquivalenten Menge Lithiumhydroxid

Man verfährt wie in Vergleichsbeispiel 1 angegeben, wobei Magnesiumoxid durch 1,2 g Lithiumhydroxid ersetzt wird. Nach 16 Stunden Reaktionszeit bei 260 °C werden 1550 g (86 % der Theorie) eines spröden Festharzes mit einem Schmelzpunkt ab 165 °C erhalten. Eine 40 Gew.-%ige Lösung in einem aromatenarmen Mineralöl des Siedebereichs 240 bis 270 °C und dem Anilinpunkt 72 °C weist eine Viskosität von 80 dPa·s auf. Die Lösung ist klar und zeigt keinerlei unlösliche Anteile. Die Verträglichkeit des Harzes mit dem Mineralöl ist besser als 1:10.

### Vergleichsbeispiel 2

### Herstellung eines Harzes analog Vergleichsbeispiel 1 in Gegenwart der äquivalenten Menge Calciumoxid

Der Ansatz aus Vergleichsbeispiel 1 wird mit 2,8 g Calciumoxid als Katalysator durchgeführt. Es werden 1410 g (78 % der Theorie) eines spröden Festharzes mit einem Schmelzpunkt ab 155 °C erhalten. Eine 40 Gew.-%ige Lösung in einem aromatenarmen Mineralöl des Siedebereichs 240 bis 270 °C und dem Anilinpunkt 72 °C weist eine Viskosität von 5 dPa·s auf. Die Lösung ist trüb, enthält also ungelöste Anteile.

### Vergleichsbeispiel 3

### Herstellung eines Harzes analog Vergleichsbeispiel 1 in Gegenwart der äquivalenten Menge Zinkoxid

Der Ansatz aus Vergleichsbeispiel 1 wird mit 4 g Zinkoxid durchgeführt. Es werden 1410 g (78 % der Theorie) eines spröden Festharzes mit einem Schmelzpunkt ab 155 °C erhalten. Eine 40 Gew.-%ige Lösung in einem aromatenarmen Mineralöl des Siedebereichs 240 bis 270 °C und dem Anilinpunkt 72 °C weist eine Viskosität von 5 dPa·s auf. Die Lösung ist trüb, enthält also ungelöste Anteile.

### Vergleichsbeispiel 4

### Herstellung eines Harzes nach der Herstellvorschrift gemäß DE-C 24 06 555 (Beispiel 3b) in Gegenwart von Magnesiumoxid.

600 g portugiesisches Kolophonium und 1200 g eines Cyclopentadienharzes (Jodzahl 197, Schmelzpunkt 75 °C) werden geschmolzen, 600 g p-t-Butylphenol und 100 g Xylol, 2 g Magnesiumoxid und 260 g Paraformaldehyd zugegeben und das Gemisch 4 Stunden unter Rückfluß kondensiert. Dann wird mit einem Wasserabscheider in einer Stunde auf 200 °C erhitzt und das Gemisch 4 Stunden bei 250 °C gehalten. Dann wird bis herab zu 50 mbar evakuiert, um störende flüchtige Anteile zu entfernen, mit Stickstoff drucklos gestellt und die Reaktion durch Abkühlen beendet. Die Ausbeute beträgt 2370 g (89 % der Theorie), der Schmelzpunkt 185 °C, die Viskosität einer 40 Gew.-%igen Lösung in Mineralöl des Siedebereichs 240 bis 270 °C und dem Anilinpunkt 72 °C 40 dPa·s. Die Lösung ist trüb, enthält also ungelöste Anteile.

### Beispiel 2

### Herstellung eines Harzes analog Vergleichsbeispiel 4 in Gegenwart der äquivalenten Menge Lithiumhydroxid

Man verfährt wie in Vergleichsbeispiel 4 angegeben, wobei Magnesiumoxid durch 1,2 g Lithiumhydroxid ersetzt werden. Nach 10 Stunden Reaktionszeit werden 2410 g (91 % der Theorie) Festharz erhalten, das ab 190 °C zu schmelzen beginnt. Die Viskosität einer 40 Gew.-%igen Lösung in Mineralöl des Siedebereichs 240 bis 270 °C und dem Anilinpunkt 72 °C beträgt 275 dPa·s. Die Lösung ist klar und zeigt keinerlei unlösliche Anteile. Die Verträglichkeit des Harzes mit Mineralöl ist besser als 1:10.

### Vergleichsbeispiel 5

### Herstellung eines Harzes unter Verwendung von Nonylphenol in Gegenwart von Magnesiumoxid

440 g portugiesisches Kolophonium und 1060 g eines Cyclopentadienharzes (Jodzahl 197, Schmelzpunkt 75 °C) werden geschmolzen, 650 g Nonylphenol, 4 g Magnesiumoxid und 440 g Paraformaldehyd zugegeben und das Gemisch 4 Stunden bei einer Temperatur von 130 °C und einem Druck von 1,5 bar kondensiert. Dann wird drucklos gestellt und unter Abdestillieren flüchtiger Bestandteile auf 260 °C erhitzt. Nach 16 Stunden wird die Reaktion durch Abkühlen des Gemisches beendet. Die Ausbeute beträgt 1632 g (63 % der Theorie), der Schmelzpunkt 125 °C, die Viskosität einer 40 Gew.-%igen Lösung in Mineralöl des Siedebereichs 240 bis 270 °C und dem Anilinpunkt 72 °C 2,5 dPa·s. Diese Harzlösung ist schwach trüb, enthält also ungelöste Anteile. Das Destillat wird zur Bestimmung des Formaldehydgehalts mit wäßriger Hydroxylaminhydrochloridlösung versetzt, die freiwerdende Salzsäure mit Kalilauge zurücktitriert und über den Verbrauch der Formaldehydgehalt bestimmt. Im Destillat sind ca. 110 g Formaldehyd nachweisbar. Damit sind 25 Gew.-% der eingesetzten Formaldehydmenge aus dem Reaktionsgemisch entwichen.

### Beispiel 3

### Herstellung eines Harzes analog Vergleichsbeispiel 5 unter Verwendung der äquivalenten Menge Lithiumhydroxid

440 g portugiesisches Kolophonium und 1060 g eines Cyclopentadienharzes (Jodzahl 197, Schmelzpunkt 75 °C) werden geschmolzen, 650 g Nonylphenol, 2,8 g Lithiumhydroxid und 440 g Paraformaldehyd zugegeben und das Gemisch 4 Stunden bei einer Temperatur von 130 °C und einem Druck von 1,5 bar kondensiert. Dann wird drucklos gestellt und unter Abdestillieren flüchtiger Bestandteile auf 260 °C erhitzt. Nach 16 Stunden wird die Reaktion durch Abkühlen des Gemisches beendet. Die Ausbeute beträgt 2305 g (89 % der Theorie), der Schmelzpunkt 155 °C, die Viskosität einer 40 Gew.-%igen Lösung in Mineralöl des Siedebereichs 240 bis 270 °C und dem Anilinpunkt 72 °C 85 dPa·s. Die Harzlösung ist völlig klar und zeigt keinerlei unlösliche Anteile. Die Verträglichkeit des Harzes mit Mineralöl ist besser als 1:10. Das Destillat wird zur Bestimmung des Formaldehydgehalts mit wäßriger Hydroxylaminhydrochloridlösung versetzt, die freiwerdende Salzsäure mit Kalilauge zurücktitriert und damit der Formaldehydgehalt bestimmt. Der Formaldehydgehalt liegt unter 0,1 %.

### Beispiel 4

### Herstellung eines Harzes analog Vergleichsbeispiel 5 unter Verwendung der äquivalenten Menge Natriumhydroxid

440 g portugiesisches Kolophonium und 1060 g eines Cyclopentadienharzes (Jodzahl 197 g Jod/100 g Harz, Schmelzpunkt 75 °C) werden geschmolzen, 650 g Nonylphenol, 4 g Natriumhydroxid und 440 g Paraformaldehyd zugegeben und das Gemisch 4 Stunden bei einer Temperatur von 130 °C und einem Druck von 1,5 bar kondensiert. Dann wird drucklos gestellt und unter Abdestillieren flüchtiger Bestandteile auf 260 °C erhitzt. Nach 16 Stunden wird die Reaktion durch Abkühlen des Gemisches beendet. Die Ausbeute beträgt 2310 g (90 % der Theorie), der Schmelzpunkt 155 °C, die Viskosität einer 40 Gew.-%igen Lösung in Mineralöl des Siedebereichs 240 bis 270 °C und dem Anilinpunkt 72 °C 85 dPa·s. Die Harzlösung ist nur schwach trüb, enthält also kaum ungelöste Anteile. Das Destillat wird zur Bestimmung des Formaldehydgehalts mit wäßriger Hydroxylaminhydrochloridlösung versetzt, die freiwerdende Salzsäure mit Kalilauge zurücktitriert und damit der Formaldehydgehalt bestimmt. Der Formaldehydgehalt liegt unter 0,1 %.

### Beispiel 5

### Herstellung eines Harzes unter Kondensation von Aldehyd und Phenol in Lösung in Gegenwart von Lithiumhydroxid.

In einer 3l-Druckapparatur werden 300 g Kolophonium und 300 g Xylol auf 260 °C erhitzt. Dazu werden innerhalb 2 h 700 g Dicyclopentadien mit einem Gehalt von 75 % Cyclopentadien-Einheiten zudosiert und weitere 5 h unter Rühren bei dieser Temperatur gehalten. Dabei bildet sich der zunächst auf 9 bar gestiegene Druck auf 5 bar zurück. Dann läßt man die Harzlösung auf 110 °C abkühlen. In diese abgekühlte Lösung werden 627 g Nonylphenol, 172 g Paraformaldehyd und 1,2 g Lithiumhydroxid gegeben. Dann wird die Apparatur druckdicht verschlossen und 4 Stunden auf 150 °C erhitzt, wobei sich ein Druck von bis zu 4 bar einstellt. Dann wird durch Belüften mit Stickstoff drucklos gestellt und auf 260 °C erwärmt, wobei das Xylol, Wasser und weitere flüchtige Bestandteile abdestillieren. Nach 16 Stunden Reaktionszeit bei 260 °C werden 1550 g (86 % der Theorie) eines spröden Festharzes mit einem Schmelzpunkt ab 165 °C erhalten. Eine 40 Gew.-%ige Lösung in einem aromatenarmen Mineralöl des Siedebereichs 240 bis 270 °C und dem Anilinpunkt 72 °C weist eine Viskosität von 80 dPa·s auf. Die Lösung ist klar und zeigt keinerlei unlösliche Anteile. Die Verträglichkeit des Harzes mit Mineralöl ist besser als 1:10.

### Beispiel 6

### Anwendungstechnisches Beispiel

Vom Produkt des Beispiels 1 wurde eine Farbe A und vom Produkt des Vergleichsbeispiels 1 eine Farbe B hergestellt und vergleichend anwendungstechnisch geprüft. Dabei wurde folgende Rezeptur verwendet:

Es wird jeweils ein Einsatzfirnis hergestellt, der 35 Gew.-% des Druckfarbenharzes, 13 Gew.-% eines handelsüblichen Alkydharzes (Viskosität 200 dPa·s, Öllänge 76 %), 19 Gew.-% Leinöl und 33 Gew.-% hochsiedendes Mineralöl mit dem Siedebereich 280 bis 310 °C enthält. Daraus wird mit ®Litholrubin L6B durch Dispergieren auf dem Dreiwalzenstuhl eine Druckfarbenpaste hergestellt, die 32 Gew.-% Pigment und 68 Gew.-% Firnis enthält. Durch Verdünnen mit Einsatzfirnis und Mineralöl wird daraus unter Zugabe von Mangannaphthenat als Sikkativ auf der Tellerreibmaschine eine druckfertige Farbe hergestellt, die aus 50 Gew.-% der Paste, 41 Gew.-% des Einsatzfirnis, 7,5 Gew.-% Mineralöl vom Siedebereich 280 bis 310 °C und 1 Gew.-% Sikkativ besteht. Diese wird auf dem Probedruckgerät der Fa. Prüfbau auf Kunstdruckpapier ®APCO II/II angedruckt und Probedrucke in Abhängigkeit der übertragenen Farbmenge ausgewertet. Bestimmt werden die Zügigkeit der Farben sowie das Wegschlagverhalten. Die Ergebnisse der Prüfungen dieser Druckfarben sind der Tabelle zu entnehmen.

Darin bedeutet:
Zügigkeit (Maß für die Farbübertragung); gemessen mit dem ®Inkomat der Fa. Prüfbau
Wegschlagen (Maß für die Trocknung); die Beurteilung erfogt mit Hilfe des Probedruckgeräts, wobei unmittelbar nach dem Andruck dieser mit unbedrucktem Papier gekontert wird. Je weniger Farbe durch die Konterung übertragen wird, desto besser ist die Trocknung. Die Auswertung erfolgt visuell, wobei die Note 1 ein sehr gutes Verhalten, die Note 6 ein sehr schlechtes Verhalten bedeutet.

| Farbe | A | B |
|---|---|---|
| Viskosität Einsatzfirnis [Pa·s / 23°C, Schergefälle 50 s⁻¹] | 30 | 8,5 |
| Viskosität Druckfarbe [Pa·s / 23°C, Schergefälle 50 s⁻¹] | 43 | 19 |
| Zügigkeit der Druckfarbe bei 200 m/s | 10,3 | 21 |
| Wegschlagen [Note 1 bis 6] | 2,0 | 5,5 |

## Patentansprüche

1. Phenolharz-modifizierte Cyclopentadienharze, herstellbar aus
a) 20 bis 80 Gew.-% Cyclopentadienverbindungen,
b) 1 bis 40 Gew.-% Naturharzsäuren,
c) 1 bis 60 Gew.-% Phenolen und
d) 1 bis 20 Gew.-% Aldehyden
in Gegenwart von
e) 0,01 bis 1 Gew.-% basisch wirkenden Verbindungen von Lithium, Natrium oder Kalium.

2. Phenolharz-modifizierte Cyclopentadienharze nach Anspruch 1, herstellbar in Gegenwart von 0,01 bis 1 Gew.-% basischen Lithiumverbindungen.

3. Verfahren zur Herstellung Phenolharz-modifizierter Cyclopentadienharze nach Anspruch 1 durch Umsetzung von
a) 20 bis 80 Gew.-% Cyclopentadienverbindungen,
b) 1 bis 40 Gew.-% Naturharzsäuren,
c) 1 bis 60 Gew.-% Phenolen und
d) 1 bis 20 Gew.-% Aldehyden
in Gegenwart von
e) 0,01 bis 1 Gew.-% basisch wirkenden Verbindungen von Lithium, Natrium oder Kalium.

4. Verfahren nach Anspruch 3, dadurch gekennzeichnet, daß man die Komponenten c) und d) in dem aus a) und b) gebildeten Umsetzungsprodukt, das als Schmelze oder in Lösung vorliegen kann, in Gegenwart von den basisches wirkenden Verbindungen unter e) zur Reaktion bringt.

5. Verfahren nach Anspruch 3, dadurch gekennzeichnet, daß die Verbindungen c) und d) in einem Temperaturbereich von 70 bis 160 °C und einem Druck von 1 bis 5 bar zur Reaktion gebracht werden.

6. Verfahren nach Anspruch 3, dadurch gekennzeichnet, daß als basisch wirkende Verbindungen Oxide, Hydroxide, Carbonate, Hydrogencarbonate, Formiate, Acetate oder Oxalate von Lithium, Natrium oder Kalium eingesetzt werden.

7. Verfahren nach Anspruch 6, dadurch gekennzeichnet, daß als basisch wirkende Verbindungen basische Lithiumverbindungen eingesetzt werden.

8. Verfahren nach Anspruch 7, dadurch gekennzeichnet, daß als basische Lithiumverbindung Lithiumhydroxid eingesetzt wird.

9. Verwendung der Phenolharz-modifizierten Cyclopentadienharze nach Anspruch 1 als Bindemittel für Druckfarben.

## Claims

1. A phenolic-resin-modified cyclopentadiene resin which can be prepared from
a) from 20 to 80 % by weight of cyclopentadiene compounds,
b) from 1 to 40 % by weight of natural resin acids,
c) from 1 to 60 % by weight of phenols and
d) from 1 to 20 % by weight of aldehydes
in the presence of
e) from 0.01 to 1 % by weight of basic compounds of lithium, sodium or potassium.

2. A phenolic-resin-modified cyclopentadiene resin as claimed in claim 1, which can be prepared in the presence of from 0.01 to 1 % by weight of basic lithium compounds.

3. A process for preparing phenolic-resin-modified cyclopentadiene resins as claimed in claim 1, which comprises reacting
a) from 20 to 80 % by weight of cyclopentadiene compounds,
b) from 1 to 40 % by weight of natural resin acids,
c) from 1 to 60 % by weight of phenols and
d) from 1 to 20 % by weight of aldehydes
in the presence of
e) from 0.01 to 1 % by weight of basic compounds of lithium, sodium or potassium.

4. The process as claimed in claim 3, wherein the components c) and d) are reacted in the reaction product formed from a) and b), which can be present as a melt or in solution, in the presence of the basic compounds under e).

5. The process as claimed in claim 3, wherein the compounds c) and d) are reacted in a temperature range from 70 to 160°C and a pressure from 1 to 5 bar.

6. The process as claimed in claim 3, wherein the basic compounds used are oxides, hydroxides, carbonates, hydrogencarbonates, formates, acetates or oxalates of lithium, sodium or potassium.

7. The process as claimed in claim 6, wherein the basic compounds used are basic lithium compounds.

8. The process as claimed in claim 7, wherein the basic lithium compound used is lithium hydroxide.

9. Use of the phenolic-resin-modified cyclopentadiene resins as claimed in claim 1 as binders for printing inks.

## Revendications

1. Résines de cyclopentadiène modifiées par une résine phénolique, que l'on peut préparer à partir
a) de 20 à 80 % en poids de composés de cyclopentadiène
b) de 1 à 40 % en poids d'acides résiniques naturels,
c) de 1 à 60 % en poids de phénols et
d) de 1 à 20 % en poids d'aldéhydes
en présence
e) de 0,01 à 1 % en poids de composés à effet basique de lithium, de sodium ou de potassium.

2. Résines de cyclopentadiène modifiées par une résine phénolique selon la revendication 1, que l'on peut préparer en présence de 0,01 à 1 % en poids de composés basiques de lithium.

3. Procédé de préparation de résines de cyclopentadiène modifiées par une résine phénolique selon la revendication 1, par réaction
a) de 20 à 80 % en poids de composés de cyclopentadiène
b) de 1 à 40 % en poids d'acides résiniques naturels,
c) de 1 à 60 % en poids de phénols et
d) de 1 à 20 % en poids d'aldéhydes
en présence
e) 0,01 à 1 % en poids de composés basiques de lithium, de sodium ou de potassium.

4. Procédé selon la revendication 3, caractérisé en ce que l'on fait réagir les composants c) et d), dans le produit réactionnel obtenu à partir de a) et de b), qui peut être présent sous forme de matière fondue ou de solution, en présence des composés à effet basique cités au point e).

5. Procédé selon la revendication 3, caractérisé en ce que l'on fait réagir les composés c) et d) dans un intervalle de températures de 70 à 160 °C et une pression de 1 à 5 bar.

6. Procédé selon la revendication 3, caractérisé en ce que l'on utilise comme composés à effet basique des oxydes, des hydroxydes, des carbonates, des bicarbonates, des formiates, des acétates ou des oxalates de lithium, de sodium ou de potassium.

7. Procédé selon la revendication 6, caractérisé en ce que l'on utilise des composés basiques de lithium comme composés à effet basique.

8. Procédé selon la revendication 7, caractérisé en ce que l'on utilise l'hydroxyde de lithium comme composé basique de lithium.

9. Utilisation de résines de cyclopentadiène modifiées par une résine phénolique selon la revendication 1, en tant que liant dans les encres d'imprimerie.
